# EUROPEAN PATENT APPLICATION

(11) **EP 4 730 258 A1**
(43) Date of publication of application: **22.04.2026**
(21) Application number: 25208576.6
(22) Date of filing: 14.10.2025
(51) Int. Cl.: G06T 7/00

(54) **INSPECTION ASSISTANCE SYSTEM, INSPECTION ASSISTANCE METHOD, AND PROGRAM**

(30) Priority: 18.10.2024 JP 2024183593
(71) Applicant: Evident Inspection Technologies Japan Corporation, Kamiina-gun, Nagano 399-0495 (JP)
(72) Inventor: TAKASAWA, Hideaki, Nagano, 399-0495 (JP)
(74) Representative: K&L Gates LLP

(57) **Abstract**

An inspection assistance system includes an insertion unit and a control unit. The control unit acquires an exterior image that is an image of an end portion of each of two or more tubes or an image of a figure indicating the end portion of each of the two or more tubes. The control unit identifies an inspection target in the exterior image based on inspection information and two or more pieces of the identification information corresponding to the two or more tubes in the exterior image. The control unit outputs the exterior image and inspection target information indicating the inspection target to a display before the insertion unit is inserted into one of the two or more tubes or when the insertion unit has been inserted into one of the two or more tubes.

## Description

### TECHNICAL FIELD

The present invention relates to an inspection assistance system, an inspection assistance method, and a program.

### BACKGROUND ART

An industrial endoscope device has been used for inspection for abnormality, corrosion, and the like (endoscopic inspection) in boilers, pipes, aircraft engines, heat exchangers, and the like. An endoscope device includes an insertion unit for acquiring an image. A user inserts the insertion unit into a subject and acquires an image of an inspection region in the subject. The user observes the image and inspects the inspection region. The insertion unit includes a bending portion for bending the insertion unit. The user can bend the insertion unit by performing a bending operation.

A heat exchanger includes a plurality of thin tubes. The insertion unit is inserted into each tube via an access port of the tube and acquires an internal image of the tube.

Patent Document 1 discloses a method of inspecting a heat exchanger. Details of the inspection method disclosed in Patent Document 1 will be described below.

A display terminal is mounted on a user's head. The display terminal acquires an exterior image including two or more access ports and displays the exterior image. The user designates an access port in the exterior image by pointing at the access port with a finger. The display terminal identifies the access port designated by the user and adds a feature (a color or text) to the access port in the exterior image. The exterior image to which a feature has been added is transmitted to a main body and is stored in a folder associated with the access port. Therefore, the user can easily recognize which access port the image acquired by the insertion unit is an image of by checking the exterior image.

### Citation List

### Patent Document

Patent Document 1: Japanese Unexamined Patent Application, First Publication No. 2016-218322

### SUMMARY OF INVENTION

### Technical Problem

In the inspection method disclosed in Patent Document 1, the display terminal adds a feature to an access port in an exterior image based on a user's gesture. The inspection method is based on the premise that the user has recognized an access port to be inspected in advance. Therefore, in some cases, the user does not correctly recognize an access port to be inspected and designates a wrong access port. Even when the user has recognized an access port to be inspected in advance, the user may designate a wrong access port.

The present invention aims at providing an inspection assistance system, an inspection assistance method, and a program that can reduce inspection errors and enhance inspection efficiency.

### Solution to Problem

According to an aspect of the present invention, an inspection assistance system assists with endoscopic inspection of a heat exchanger including two or more tubes. The inspection assistance system includes an insertion unit and a control unit. The insertion unit generates an internal image of at least one of the two or more tubes. The control unit acquires an exterior image that is an image of an end portion of each of the two or more tubes or is an image of a figure indicating the end portion of each of the two or more tubes. The control unit assigns identification information to each of the two or more tubes in the exterior image. The control unit acquires inspection information including identification information of a tube that is included in the two or more tubes and is an inspection target. The control unit identifies the inspection target in the exterior image based on the inspection information and two or more pieces of the identification information corresponding to the two or more tubes in the exterior image. The control unit outputs the exterior image and inspection target information indicating the inspection target to a display before the insertion unit is inserted into one of the two or more tubes or when the insertion unit has been inserted into one of the two or more tubes.

According to an aspect of the present invention, the control unit may identify a tube into which the insertion unit is inserted by processing an image generated by the insertion unit. The control unit may determine whether the tube into which the insertion unit is inserted is the inspection target.

According to an aspect of the present invention, the control unit may output a warning to the display when it is determined that the tube into which the insertion unit is inserted is not the inspection target.

According to an aspect of the present invention, the control unit may receive an instruction to select an inspection mode corresponding to the endoscopic inspection of the heat exchanger. The control unit may acquire the exterior image after the instruction has been received.

According to an aspect of the present invention, the control unit may identify a tube into which the insertion unit is inserted by processing an image generated by the insertion unit. The control unit may output insertion tube information indicating the tube into which the insertion unit is inserted to the display.

According to an aspect of the present invention, the control unit may acquire an image generated by the insertion unit as the exterior image from the insertion unit or a storage medium.

According to an aspect of the present invention, the control unit may acquire an image generated by a camera other than the insertion unit as the exterior image from the camera.

According to an aspect of the present invention, the control unit may acquire the exterior image that is the image of the figure from a storage medium.

According to an aspect of the present invention, the control unit may acquire specific information of the heat exchanger. The control unit may determine whether the inspection information including the specific information is stored in a storage medium. The control unit may store the inspection information including the specific information in the storage medium after it has been determined that the inspection information is not stored in the storage medium.

According to an aspect of the present invention, the control unit may store the inspection information including the exterior image and inspection result information indicating a result of the endoscopic inspection of a tube associated with one of the two or more pieces of the identification information in the storage medium.

According to an aspect of the present invention, the control unit may generate two or more folders in the storage medium when it is determined that the inspection information including the specific information is not stored in the storage medium. The control unit may associate each of the two or more folders with one of the two or more pieces of the identification information. The control unit may store the inspection result information in a folder associated with the identification information of a tube on which the endoscopic inspection has been performed after the endoscopic inspection has been performed.

According to an aspect of the present invention, the control unit may set a display state of the inspection target information based on the inspection result information.

According to an aspect of the present invention, the control unit may output information for prompting imaging of the end portion of each of the two or more tubes in order to acquire the exterior image to the display when it is determined that the inspection information including the specific information is not stored in the storage medium.

According to an aspect of the present invention, the control unit may identify all of the two or more tubes as the inspection target when it is determined that the inspection information including the specific information is not stored in the storage medium.

According to an aspect of the present invention, the control unit may acquire the inspection information from the storage medium when it is determined that the inspection information including the specific information is stored in the storage medium.

According to an aspect of the present invention, the control unit may detect the two or more tubes by processing the exterior image. The control unit may assign the identification information to each of the two or more tubes detected from the exterior image.

According to an aspect of the present invention, the control unit may superimpose the inspection target information on the exterior image.

According to an aspect of the present invention, the inspection assistance system may further include an endoscope device including the insertion unit and the control unit.

According to an aspect of the present invention, the inspection assistance system may further include an endoscope device including the insertion unit. The control unit may be separated from the endoscope device.

According to an aspect of the present invention, an inspection assistance method of assisting with endoscopic inspection of a heat exchanger including two or more tubes is provided. In the inspection assistance method, a control unit executes: acquiring an exterior image that is an image of an end portion of each of the two or more tubes or is an image of a figure indicating the end portion of each of the two or more tubes; assigning identification information to each of the two or more tubes in the exterior image; acquiring inspection information including identification information of a tube that is included in the two or more tubes and is an inspection target; identifying the inspection target in the exterior image based on the inspection information and two or more pieces of the identification information corresponding to the two or more tubes in the exterior image; and outputting the exterior image and inspection target information indicating the inspection target to a display before an insertion unit configured to generate an internal image of at least one of the two or more tubes is inserted into one of the two or more tubes or when the insertion unit has been inserted into one of the two or more tubes.

According to an aspect of the present invention, a program is provided for causing a computer to execute: acquiring an exterior image that is an image of an end portion of each of two or more tubes included in a heat exchanger or an image of a figure indicating the end portion of each of the two or more tubes; assigning identification information to each of the two or more tubes in the exterior image; acquiring inspection information including identification information of a tube that is included in the two or more tubes and is an inspection target; identifying the inspection target in the exterior image based on the inspection information and two or more pieces of the identification information corresponding to the two or more tubes in the exterior image; and outputting the exterior image and inspection target information indicating the inspection target to a display before an insertion unit configured to generate an internal image of at least one of the two or more tubes is inserted into one of the two or more tubes or when the insertion unit has been inserted into one of the two or more tubes.

### Advantageous Effects of Invention

According to the present invention, the inspection assistance system, the inspection assistance method, and the program can reduce inspection errors and enhance inspection efficiency.

### BRIEF DESCRIPTION OF DRAWINGS

[FIG. 1] A block diagram showing an example of the configuration of an endoscope system according to a first embodiment of the present invention.
[FIG. 2] A diagram showing a structure of a heat exchanger in the first embodiment of the present invention.
[FIG. 3] A flowchart showing an example of a preparation process executed by the endoscope system according to the first embodiment of the present invention.
[FIG. 4] A diagram showing an example of a screen of a display unit included in the endoscope system according to the first embodiment of the present invention.
[FIG. 5] A diagram showing an example of the screen of the display unit included in the endoscope system according to the first embodiment of the present invention.
[FIG. 6] A diagram showing an example of the screen of the display unit included in the endoscope system according to the first embodiment of the present invention.
[FIG. 7] A diagram showing an example of the screen of the display unit included in the endoscope system according to the first embodiment of the present invention.
[FIG. 8] A is a diagram showing an example of a management table in the first embodiment of the present invention.
[FIG. 9] A diagram showing an example of the screen of the display unit included in the endoscope system according to the first embodiment of the present invention.
[FIG. 10] A flowchart showing an example of an inspection process executed by the endoscope system according to the first embodiment of the present invention.
[FIG. 11] A diagram showing an example of the screen of the display unit included in the endoscope system according to the first embodiment of the present invention.
[FIG. 12] A diagram showing an example of the screen of the display unit included in the endoscope system according to the first embodiment of the present invention.
[FIG. 13] A flowchart showing an example of an information-updating process executed by the endoscope system according to the first embodiment of the present invention.
[FIG. 14] A diagram showing an example of the screen of the display unit included in the endoscope system according to the first embodiment of the present invention.
[FIG. 15] A diagram showing an example of the screen of the display unit included in the endoscope system according to the first embodiment of the present invention.
[FIG. 16] A block diagram showing an example of the configuration of an endoscope system according to a first modified example of the first embodiment of the present invention.
[FIG. 17] A block diagram showing an example of the configuration of an endoscope system according to a second modified example of the first embodiment of the present invention.
[FIG. 18] A flowchart showing an example of a preparation process executed by an endoscope system according to a second embodiment of the present invention.
[FIG. 19] A diagram showing an example of a screen of a display unit included in the endoscope system according to the second embodiment of the present invention.
[FIG. 20] A diagram showing an example of a management table according to the second embodiment of the present invention.
[FIG. 21] A flowchart showing an example of an inspection process executed by the endoscope system according to the second embodiment of the present invention.
[FIG. 22] A flowchart showing an example of the inspection process executed by the endoscope system according to the second embodiment of the present invention.
[FIG. 23] A diagram showing an example of the screen of the display unit included in the endoscope system according to the second embodiment of the present invention.
[FIG. 24] A diagram showing an example of the screen of the display unit included in the endoscope system according to the second embodiment of the present invention.
[FIG. 25] A diagram showing an example of the screen of the display unit included in the endoscope system according to the second embodiment of the present invention.
[FIG. 26] A diagram showing an example of the screen of the display unit included in the endoscope system according to the second embodiment of the present invention.
[FIG. 27] A diagram showing an example of the screen of the display unit included in the endoscope system according to the second embodiment of the present invention.
[FIG. 28] A diagram showing an example of the screen of the display unit included in the endoscope system according to the second embodiment of the present invention.

### DESCRIPTION OF EMBODIMENTS

Hereinafter, an embodiment of the present invention will be described with reference to the drawings. In the following description, an endoscope system will be described as an example of an inspection assistance system.

### (First embodiment)

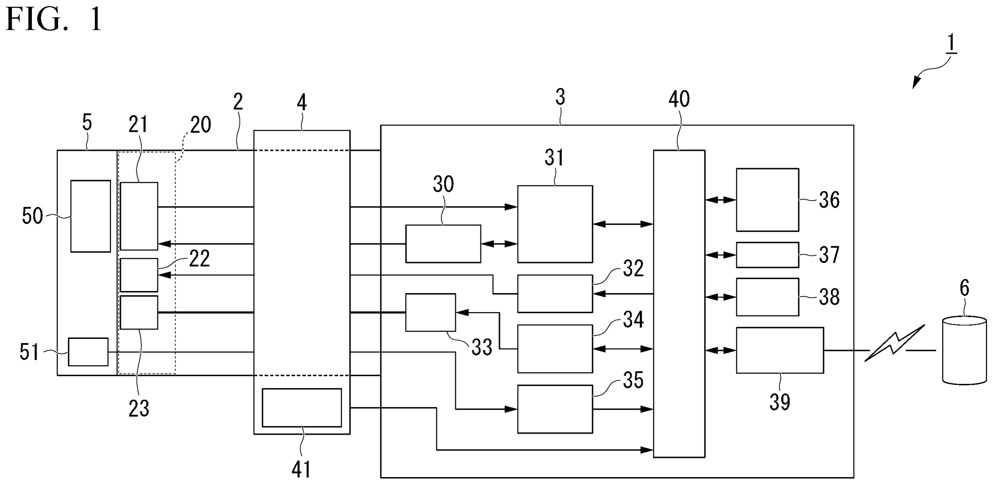

FIG. 1 shows an example of the configuration of an endoscope system 1 according to a first embodiment of the present invention. The endoscope system 1 shown in FIG. 1 includes an insertion unit 2, a main body 3, an insertion length detector 4, and an optical adapter 5. The insertion unit 2 and the main body 3 constitute an endoscope device.

The insertion unit 2 is inserted into a subject that is an observation target. The subject is a tube of a heat exchanger. The insertion unit 2 has a thin and long tube shape and is bendable. A user performs an insertion operation to insert the insertion unit 2 into the subject. The insertion unit 2 acquires an internal optical image of the subject. The insertion unit 2 includes an imaging device 21, a light-emitting diode (LED) 22, and a wire-fixing unit 23.

The imaging device 21, the LED 22, and the wire-fixing unit 23 are disposed in a distal end portion 20 including the distal end of the insertion unit 2.

The imaging device 21 is an image sensor such as a charge-coupled device (CCD) image sensor or a complementary metal-oxide-semiconductor (CMOS) image sensor. The imaging device 21 generates an image (an endoscopic image) based on an optical image acquired by the insertion unit 2. The image generated by the imaging device 21 is output to the main body 3. The LED 22 generates illumination light. The illumination light generated by the LED 22 is radiated into the subject. The wire-fixing unit 23 is connected to a wire for bending the insertion unit 2 and fixes the wire.

The optical adapter 5 is attached to the distal end portion 20. The optical adapter 5 includes an optical lens 50 and an identifier storage unit 51.

Illumination light reflected by the inside of the subject is incident on the optical lens 50. The light incident on the optical lens 50 passes through the optical lens 50 and is incident on the imaging device 21. The identifier storage unit 51 stores an identifier corresponding to the type of the optical lens 50.

The main body 3 includes an imaging device driver 30, an image-processing unit 31, an LED drive unit 32, a motor 33, a bending control unit 34, an optical adapter identification unit 35, a display unit 36, a memory 37, an operation unit 38, an external device interface 39, and a control unit 40.

The imaging device driver 30 drives the imaging device 21. The image-processing unit 31 controls the imaging device driver 30. The image-processing unit 31 executes image processing such as noise reduction on an image output from the imaging device 21 and outputs the image to the control unit 40.

The LED drive unit 32 drives the LED 22. The motor 33 bends the insertion unit 2 in a predetermined direction by pulling the wire connected to the wire-fixing unit 23. The bending control unit 34 controls the motor 33.

The optical adapter identification unit 35 detects an identifier stored in the identifier storage unit 51 and identifies the type of the optical adapter 5 corresponding to the identifier. For example, the type of the optical adapter 5 includes a direct-view adapter and a side-view adapter. The direct-view adapter is an optical adapter for observing a subject in a direction parallel to the longitudinal direction of the insertion unit 2. The side-view adapter is an optical adapter for observing a subject in a direction perpendicular to the longitudinal direction of the insertion unit 2.

The display unit 36 is a display such as a liquid crystal display (LCD). The display unit 36 displays an image generated by the imaging device 21.

The memory 37 is a static random access memory (SRAM), an erasable programmable read-only memory (EPROM), an electrically erasable programmable read-only memory (EEPROM), or a flash memory. The memory 37 may be attachable to and detachable from the main body 3. The memory 37 stores an image generated by the imaging device 21 and various kinds of information processed by the control unit 40.

The operation unit 38 includes a button that can be operated by a user and receives input of various kinds of information from the user. The main body 3 may include a touch panel disposed on the screen of the display unit 36. The user may input various kinds of information to the main body 3 by operating the touch panel.

The external device interface 39 executes wired communication or wireless communication with an external device 6. The external device 6 is a personal computer, a server in a cloud network, or the like and stores inspection-setting information. The inspection-setting information includes information indicating a tube that is an inspection target. The external device interface 39 receives the inspection-setting information from the external device 6.

The memory 37 stores the inspection-setting information received from the external device 6. After inspection has been performed, the memory 37 stores an inspection history including an inspection result.

The control unit 40 controls each unit of the main body 3. At least one of the control unit 40, the image-processing unit 31, the LED drive unit 32, the bending control unit 34, and the optical adapter identification unit 35 may include at least one of a processor and a logic circuit. For example, the processor is at least one of a central processing unit (CPU), a digital signal processor (DSP), and a graphics-processing unit (GPU). For example, the logic circuit is at least one of an application-specific integrated circuit (ASIC) and a field-programmable gate array (FPGA). At least one of the control unit 40, the image-processing unit 31, the LED drive unit 32, the bending control unit 34, and the optical adapter identification unit 35 may include one or more processors. At least one of the control unit 40, the image-processing unit 31, the LED drive unit 32, the bending control unit 34, and the optical adapter identification unit 35 may include one or more logic circuits.

A computer of the endoscope system 1 may read a program and execute the read program. The program includes instructions for prescribing the operation of at least one of the control unit 40, the image-processing unit 31, the LED drive unit 32, the bending control unit 34, and the optical adapter identification unit 35. That is, the function of at least one of the control unit 40, the image-processing unit 31, the LED drive unit 32, the bending control unit 34, and the optical adapter identification unit 35 may be realized by software.

The program may be provided, for example, using a "computer-readable recording medium" such as a flash memory. The program may be transmitted from a computer storing the program to the endoscope system 1 via a transmission medium or using carrier waves in the transmission medium. The "transmission medium" for transmitting a program is a medium having a function of transmitting information. The medium having a function of transmitting information includes a network (a communication network) such as the Internet and a communication circuit line (a communication line) such as a telephone line. The program may realize some of the above-described functions. The program may be a differential file (a differential program). The above-described functions may be realized in combination of the differential program with a program recorded in advance in the computer.

The insertion length detector 4 includes a sensor 41. For example, the sensor 41 is an optical sensor and detects the length (an insertion length) of the insertion unit 2 inserted into a space in a subject by detecting the amount of movement of the insertion unit. The insertion length corresponds to the position of the distal end portion 20. The sensor 41 outputs a signal corresponding to the insertion length to the control unit 40.

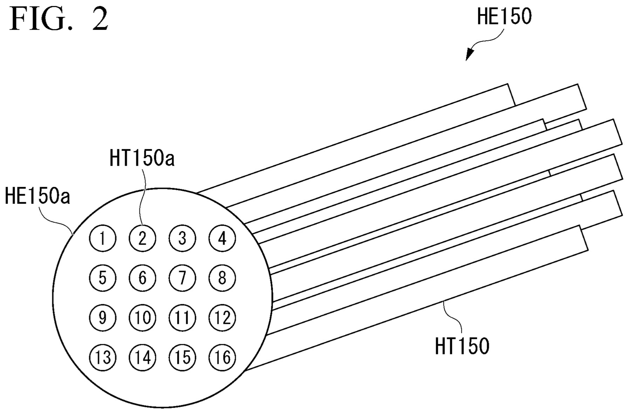

FIG. 2 shows the structure of a heat exchanger HE150. The heat exchanger HE150 includes two or more tubes HT150. Numbers that are IDs are assigned to the tubes HT150. An end portion HT150a of each tube HT150 is disposed at an end portion HE150a of the heat exchanger HE150. The end portion HT150a is a hole. The insertion unit 2 is inserted into the end portion HT150a or pulled out of the end portion HT150a. The numbers of the tubes HT150 are shown in FIG. 2, but the numbers are not displayed actually.

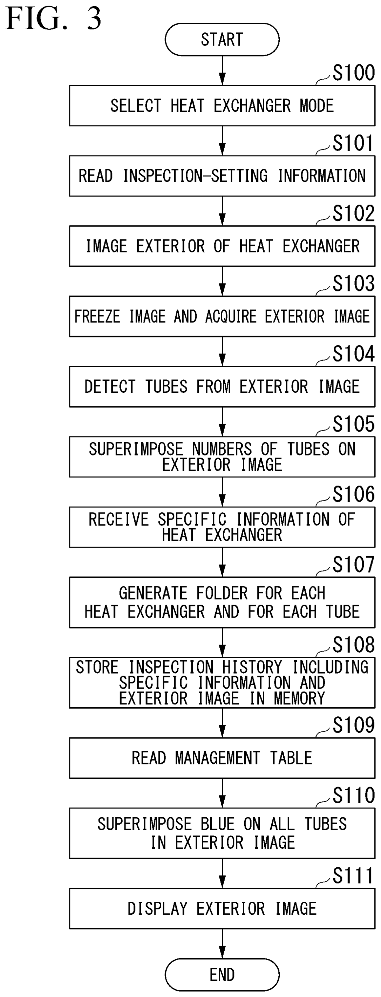

FIG. 3 shows an example of a preparation process executed by the endoscope system 1 before inspection of a heat exchanger is performed. Before inspection of a specific heat exchanger is first performed, the endoscope system 1 executes the preparation process shown in FIG. 3. The operations of the endoscope system 1 will be described by using FIG. 3.

Two or more inspection modes are prepared. For example, inspection modes such as a heat exchanger mode for inspecting a heat exchanger and a pipe mode for inspecting a pipe are prepared. A user inputs mode information indicating the heat exchanger mode as the inspection mode to the endoscope system 1 by operating the operation unit 38. The control unit 40 receives the mode information (Step S100). After the mode information indicating the heat exchanger mode has been received, the endoscope system 1 operates in the heat exchanger mode.

A user inputs selection information for selecting inspection-setting information of the identified heat exchanger to the endoscope system 1 by operating the operation unit 38. The control unit 40 receives the selection information. The control unit 40 reads the inspection-setting information indicated by the selection information from the memory 37 (Step S101). The inspection-setting information includes specific information of a heat exchanger and a number of a tube that is an inspection target.

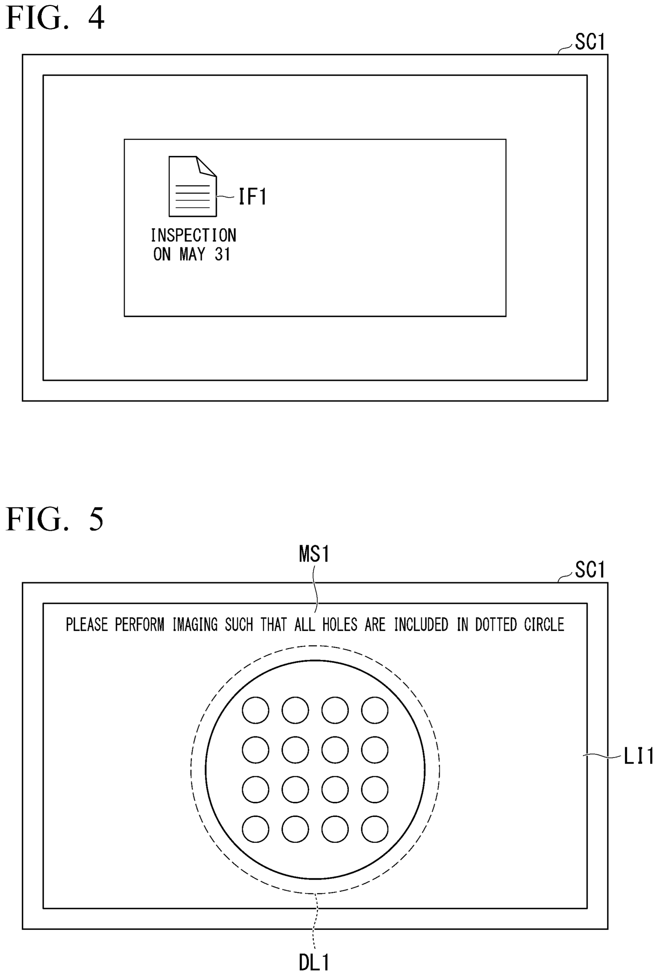

FIG. 4 shows an example of the screen of the display unit 36 in Step S101. The display unit 36 includes a screen SC1. The control unit 40 displays inspection-setting information IF1 of the identified heat exchanger on the screen SC1. For example, a folder for each heat exchanger is prepared in the memory 37. When a user selects a folder corresponding to the identified heat exchanger, inspection-setting information IF1 included in the folder is displayed. When the user performs a predetermined operation, selection information for selecting the inspection-setting information IF1 is input to the endoscope system 1.

The user may input heat exchanger information indicating the identified heat exchanger to the endoscope system 1 by operating the operation unit 38. The control unit 40 may receive the heat exchanger information. The control unit 40 may read inspection-setting information including specific information corresponding to the heat exchanger indicated by the heat exchanger information from the memory 37.

After Step S101, the control unit 40 outputs information for encouraging a user to image the exterior of the heat exchanger to the display unit 36 and displays the information on the display unit 36. The user directs the distal end portion 20 of the insertion unit 2 to the heat exchanger in accordance with the information and images the exterior of the heat exchanger. The imaging device 21 generates an image in which end portions of two or more tubes appear. The image-processing unit 31 processes the image. The control unit 40 acquires the image processed by the image-processing unit 31 (Step S102).

FIG. 5 shows an example of the screen SC1 of the display unit 36 in Step S102. The imaging device 21 consecutively images the exterior of the heat exchanger and sequentially generates two or more live images. The image-processing unit 31 sequentially processes the two or more live images. The control unit 40 sequentially acquires the two or more live images processed by the image-processing unit 31 and sequentially displays the two or more live images on the screen SC1. For example, the control unit 40 displays a live image LI1 on the screen SC1.

The control unit 40 displays a message MS1 on the screen SC1. The message MS1 encourages a user to image the exterior of the heat exchanger in a state in which the end portions of all the tubes are included in a dotted line DL1 displayed in the live image LI1.

When the user instructs to perform imaging in that state, the control unit 40 instructs the imaging device 21 to freeze an image in order to acquire an exterior image. The imaging device 21 generates an exterior image that is a still image, and the image-processing unit 31 processes the exterior image. The control unit 40 acquires the exterior image processed by the image-processing unit 31 (Step S103).

The user may image the exterior of the heat exchanger using a camera such as a digital camera, a smartphone, or a tablet. The control unit 40 may acquire the exterior image from the camera via the external device interface 39.

The memory 37 may store a schematic image of a figure indicating arrangement of the two or more tubes of the heat exchanger in advance. For example, the figure includes a circle indicating an end surface of the heat exchanger and two or more circles indicating end portions of two or more tubes. The control unit 40 may acquire the image as the exterior image from the memory 37.

After Step S103, the control unit 40 processes the exterior image and detects the end portions of the two or more tubes. For example, the control unit 40 detects the end portions of the two or more tubes using an artificial intelligence (AI) function (Step S104).

After Step S104, the control unit 40 associates numbers with the tubes by assigning the numbers to the tubes. At this time, the control unit 40 automatically assigns the numbers to the tubes detected in Step S104. For example, the control unit 40 assigns serial numbers to the tubes from the left-upper tube to the right-lower tube in the exterior image. Alternatively, the user may input the numbers of the tubes by operating the operation unit 38, and the control unit 40 may assign the numbers to the tubes detected in Step S104. The control unit 40 stores tube information including the positions of the tubes in the exterior image and the numbers of the tubes in the memory 37. The control unit 40 superimposes the numbers of the tubes on the exterior image (Step S105).

The user inputs specific information corresponding to the individual heat exchanger to the endoscope system 1 by operating the operation unit 38. The specific information indicates a name and an individual number of each heat exchanger. The control unit 40 receives the specific information (Step S106).

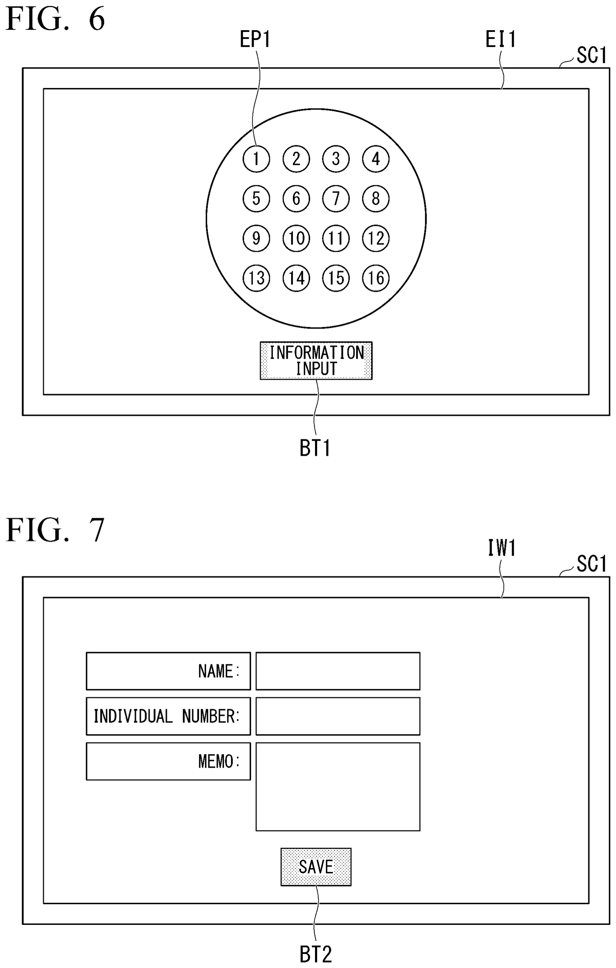

FIG. 6 shows an example of the screen SC1 of the display unit 36 in Step S105. The control unit 40 displays an exterior image EI1 on the screen SC1. End portions EP1 of two or more tubes appear in the exterior image EI1, and the numbers of the tubes are superimposed on the end portions EP1. The control unit 40 displays a button BT1 on the exterior image EI1. The user presses the button BT1 by operating the operation unit 38.

FIG. 7 shows an example of the screen SC1 of the display unit 36 in Step S106. The control unit 40 displays an input window IW1 on the screen SC1. The user inputs specific information indicating the name, the individual number, and the like of the heat exchanger to the endoscope system 1 by operating the operation unit 38. The specific information input by the user is assumed to match the specific information included in the inspection-setting information. After the specific information has been input, the user presses a button BT2 by operating the operation unit 38. At this time, the control unit 40 receives the specific information input by the user.

After Step S106, the control unit 40 generates a folder for storing the specific information or the like in the memory 37. At this time, the control unit 40 generates a folder for each tube under the folder for each heat exchanger. Since the heat exchanger includes two or more tubes, the control unit 40 generates two or more folders. The control unit 40 associates the two or more folders with the numbers of the tubes. For example, the name of each folder includes the number of the corresponding tube (Step S107).

After Step S107, the control unit 40 stores an inspection history including the specific information received in Step S106 and the exterior image processed in Step S105 in the memory 37 (Step S108). The inspection history may include information indicating the relationship between each folder and the number of the corresponding tube.

The memory 37 stores a management table for managing an inspection target in advance. The management table includes information indicating whether each tube is an inspection target. Before first inspection starts, the management table includes information indicating that all the tubes are inspection targets. After Step S108, the control unit 40 reads the management table from the memory 37 (Step S109).

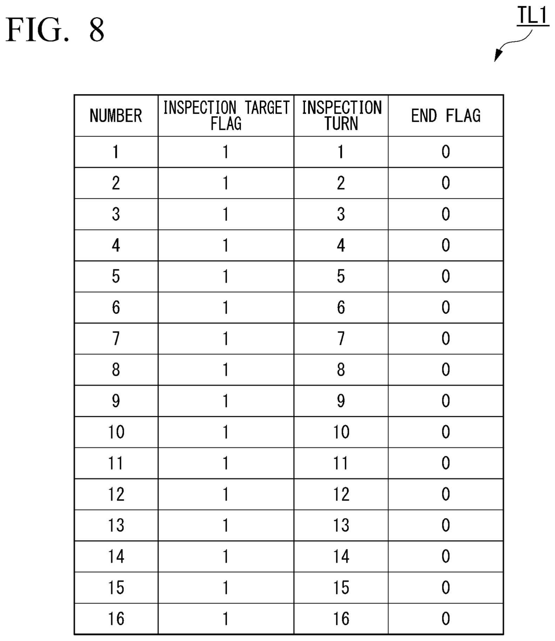

FIG. 8 shows an example of the management table. The management table TL1 shown in FIG. 8 includes a name of each tube, an inspection target flag, an inspection turn, and an end flag. These are associated with each other.

The inspection target flag indicates whether the corresponding tube is an inspection target. The inspection target flag has a value of 1 or 0. When the value of the inspection target flag is 1, the tube associated with the inspection target flag is an inspection target. When the value of the inspection target flag is 0, the tube associated with the inspection target flag is not an inspection target. Before the first inspection starts, the values of the inspection target flags of all the tubes are 1.

The inspection turn indicates a turn in which inspection is performed. The end flag indicates whether inspection of the corresponding tube has ended. The end flag has a value of 1 or 0. When the inspection has ended, the value of the end flag is 1. When the inspection has not ended, the value of the end flag is 0. Before the first inspection starts, the values of the end flags of all the tubes are 0.

After Step S109, the control unit 40 determines that all the tubes are inspection targets based on the management table and superimposes blue on all the tubes in the exterior image (Step S110). After Step S110, the control unit 40 outputs the exterior image to the display unit 36 and displays the exterior image on the display unit 36 (Step S111). When Step S111 is executed, the preparation process shown in FIG. 3 ends.

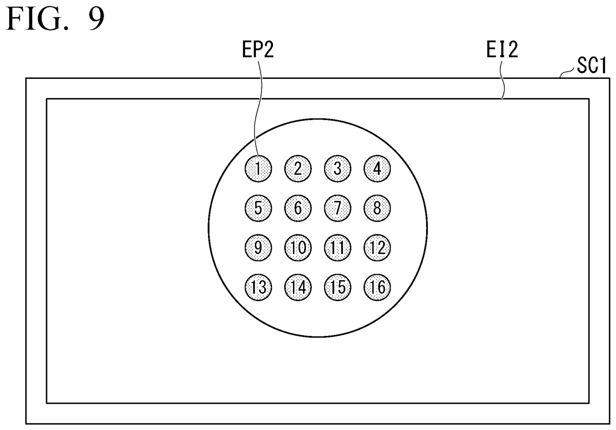

FIG. 9 shows an example of the screen SC1 of the display unit 36 in Step S110. The control unit 40 displays an exterior image EI2 on the screen SC1. End portions EP2 of two or more tubes are displayed in blue.

Blue is superimposed on a tube that is an inspection target. The user can determine that a blue tube in the exterior image is an inspection target. In general, all the tubes are inspected in the first inspection. In the preparation process, blue is superimposed on all the tubes. The color superimposed on a tube in the exterior image in each embodiment is not limited to that described in each embodiment.

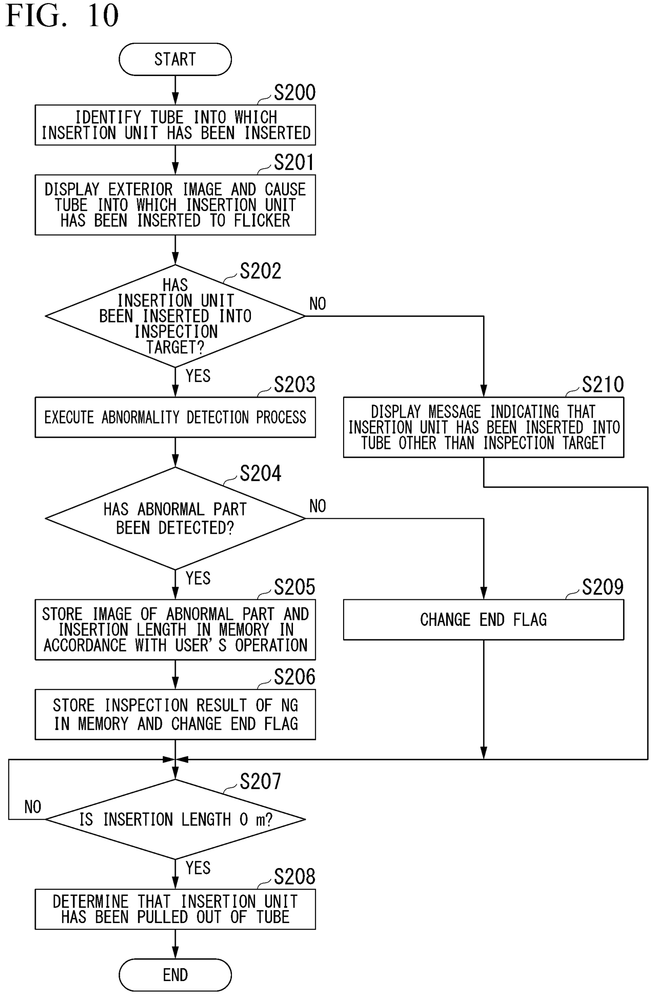

FIG. 10 shows an example of an inspection process executed by the endoscope system 1 after the preparation process has been performed. The operations of the endoscope system 1 will be described by using FIG. 10.

A user holds the insertion unit 2 and causes the distal end portion 20 of the insertion unit 2 to approach a heat exchanger. The user inserts the insertion unit 2 into a tube that is an inspection target. In the first inspection, the user inserts the insertion unit 2 into, for example, the left-upper tube.

The imaging device 21 consecutively images the exterior of the heat exchanger and sequentially generates two or more live images. The image-processing unit 31 sequentially processes the two or more live images. The control unit 40 sequentially acquires the two or more live images processed by the image-processing unit 31 and sequentially displays the two or more live images on the display unit 36. The control unit 40 detects the insertion unit 2 and the end portions of the tubes in each live image and identifies the tube into which the insertion unit 2 has been inserted. The control unit 40 refers to the tube information stored in the memory 37. The tube information includes positions of the tubes in the exterior image and numbers of the tubes. The control unit 40 acquires the number of the tube into which the insertion unit 2 has been inserted (Step S200).

After Step S200, the control unit 40 outputs the exterior image to the display unit 36 and displays the exterior image on the display unit 36. The control unit 40 causes the tube into which the insertion unit 2 has been inserted in the exterior image to flicker (Step S201).

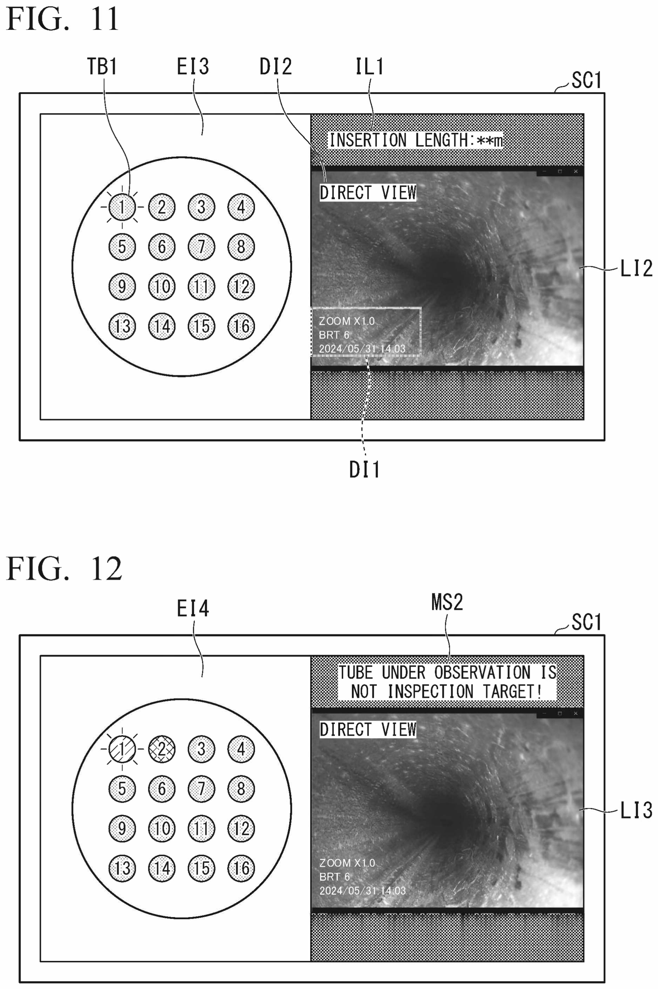

FIG. 11 shows an example of the screen SC1 of the display unit 36 in Step S201. The control unit 40 displays a live image LI2 and an exterior image EI3 on the screen SC1. The control unit 40 displays an insertion length IL1, device-setting information DI1, and device-setting information DI2 on the live image LI2. For example, the insertion length IL1 is displayed in white. The device-setting information DI1 includes an imaging magnification, illumination brightness, and date and time. The device-setting information DI1 may include information on bending control of the insertion unit 2. The device-setting information DI2 indicates the type of the optical adapter 5.

The insertion unit 2 is inserted into the tube with number 1. The control unit 40 causes a tube TB1 with number 1 in the exterior image EI3 to flicker. By doing this, the control unit 40 displays insertion tube information indicating the tube into which the insertion unit 2 has been inserted. The user can ascertain the tube into which the insertion unit 2 has been inserted.

A method of notifying the user of the tube into which the insertion unit 2 has been inserted is not limited to flickering of a specific tube in the exterior image. For example, the control unit 40 may display an arrow, specific text, a specific figure, or a specific symbol in the vicinity of the specific tube in the exterior image. Alternatively, the control unit 40 may display the number of the specific tube in the exterior image.

After Step S201, the control unit 40 determines whether the insertion unit 2 has been inserted into an inspection target (Step S202).

Details of Step S202 will be described. The control unit 40 refers to the management table stored in the memory 37. The control unit 40 acquires information of the same number as that acquired in Step S200 from the management table. When the value of the inspection target flag associated with that number is 1 and the value of the end flag associated with that number is 0, the control unit 40 determines that the insertion unit 2 has been inserted into the inspection target. When the value of the inspection target flag associated with that number is 0, the control unit 40 determines that the insertion unit 2 has been inserted into a tube other than the inspection target. When the value of the inspection target flag associated with that number is 1 and the value of the end flag associated with that number is 1, the control unit 40 also determines that the insertion unit 2 has been inserted into a tube other than the inspection target.

When the control unit 40 determines that the insertion unit 2 has been inserted into the inspection target in Step S202, the control unit 40 executes an abnormality detection process using the live images generated by the imaging device 21. For example, the control unit 40 detects an abnormal part having a specific color or shape or the like in the abnormality detection process. The control unit 40 may detect an abnormal part using an AI function (Step S203).

After Step S203, the control unit 40 determines whether an abnormal part has been detected (Step S204).

A user may observe a live image displayed on the display unit 36 and determines whether an abnormal part appears in the live image. When the abnormal part appears in the live image, the user may input information indicating that the abnormal part has been detected to the endoscope system 1 by operating the operation unit 38. In Step S204, the control unit 40 may determine that the abnormal part has been detected based on the information.

When the control unit 40 determines that the abnormal part has been detected in Step S204, the control unit 40 outputs a message for encouraging the user to acquire an abnormal image that is an image in which the abnormal part appears to the display unit 36 and displays the message on the display unit 36. The user inputs an instruction to acquire the abnormal image to the endoscope system 1 by operating the operation unit 38. The control unit 40 receives the instruction and stores the abnormal image and insertion length information indicating an insertion length in the memory 37. The insertion length is indicated by a signal output from the sensor 41 of the insertion length detector 4. The live image and the insertion length information are stored in the folder associated with the number of the tube identified in Step S200 and are also included in the inspection history (Step S205).

After Step S205, the control unit 40 stores an inspection result indicating NG in the memory 37. The inspection result is stored in the folder associated with the number of the tube identified in Step S200 and is also included in the inspection history. The control unit 40 changes the value of the end flag associated with that number of the tube in the management table to 1 (Step S206).

When the control unit 40 determines that the abnormal part has not been detected in Step S204, the control unit 40 changes the value of the end flag associated with that number of the tube in the management table to 1 (Step S209).

After Step S206 or Step S209, the control unit 40 determines whether the insertion length is 0 m (Step S207).

When the control unit 40 determines that the insertion length is not 0 m, that is, the insertion length is greater than 0 m, in Step S207, the determination of Step S207 is continued. When the control unit 40 determines that the insertion length is 0 m in Step S207, the control unit 40 determines that the insertion unit 2 has been pulled out of the tube (Step S208). When Step S208 is executed, the inspection process shown in FIG. 10 ends.

When the control unit 40 determines that the insertion unit 2 has been inserted into a tube other than the inspection target in Step S202, the control unit 40 outputs a message indicating that the insertion unit 2 has been inserted into a tube other than the inspection target to the display unit 36 and displays the message on the display unit 36 (Step S210). After Step S210, Step S207 is executed.

FIG. 12 shows an example of the screen SC1 of the display unit 36 in Step S210. The control unit 40 displays a live image LI3 and an exterior image EI4 on the screen SC1.

In the example shown in FIG. 12, inspection of the tube with number 1 and the tube with number 2 has ended. As will be described later, a color corresponding to the inspection result is superimposed on a tube of which inspection has ended. In the example shown in FIG. 12, the insertion unit 2 is inserted into the tube with number 1, and the tube in the exterior image flickers. Since the insertion unit 2 has been inserted into the tube of which inspection has ended, the control unit 40 displays a message MS2 as a warning on the screen SC1. The message MS2 indicates that the tube into which the insertion unit 2 has been inserted is not an inspection target. The user can determine that the insertion unit 2 has been inserted into a tube other than the inspection target.

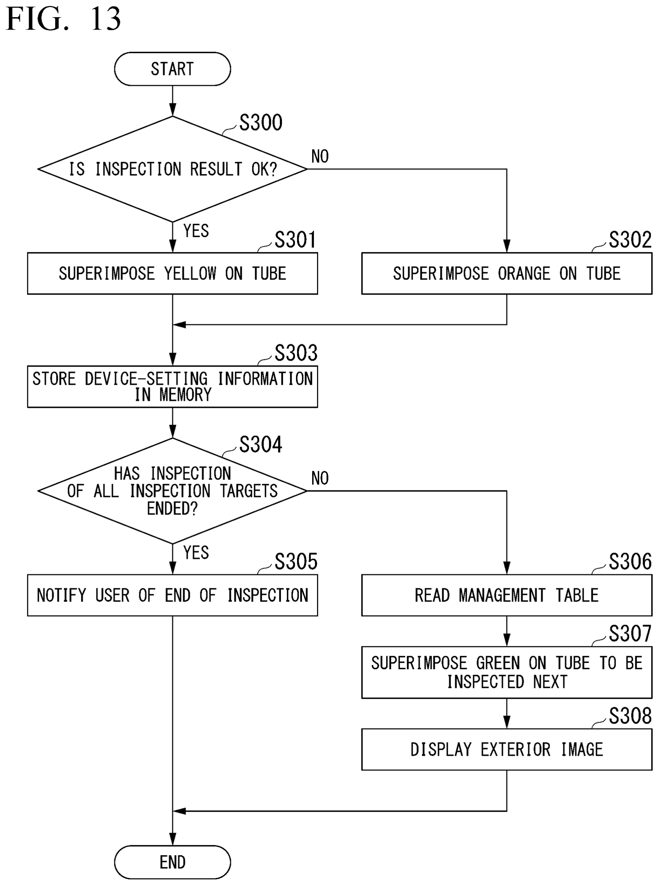

FIG. 13 shows an information-updating process executed by the endoscope system 1 after the inspection process has been performed. The operations of the endoscope system 1 will be described by using FIG. 13.

The control unit 40 refers to the inspection history stored in the memory 37 and determines whether the inspection result of the tube identified in Step S200 shown in FIG. 10 is OK (Step S300). When the inspection history includes an inspection result indicating NG, the control unit 40 determines that the inspection result is NG. When the inspection history does not include the inspection result indicating NG, the control unit 40 determines that the inspection result is OK.

When the control unit 40 determines that the inspection result is OK in Step S300, the control unit 40 identifies a tube in the exterior image corresponding to the number acquired in Step S200 and superimposes yellow on the tube in the exterior image (Step S301).

When the control unit 40 determines that the inspection result is NG in Step S300, the control unit 40 identifies a tube in the exterior image corresponding to the number acquired in Step S200 and superimposes orange on the tube in the exterior image (Step S302).

Details of Steps S301 and S302 will be described. The control unit 40 refers to the tube information stored in the memory 37. The tube information includes positions of the tubes in the exterior image and numbers of the tubes. The control unit 40 acquires the position associated with the same number as that acquired in Step S200. The control unit 40 superimposes yellow or orange on the tube at the position in the exterior image.

After Step S301 or S302, the control unit 40 stores device-setting information in the memory 37 (Step S303). The device-setting information includes an image magnification, image brightness, and date and time. The device-setting information may include parameters of image processing in the image-processing unit 31. The device-setting information is included in the inspection history.

After Step S303, the control unit 40 determines whether inspection of all the inspection targets has ended (Step S304).

When the control unit 40 determines that the inspection of all the inspection targets has ended in Step S304, the control unit 40 outputs information indicating that the inspection has ended to the display unit 36 and displays that information on the display unit 36. By doing this, the control unit 40 notifies the user that the inspection has ended (Step S305). When Step S305 is executed, the information-updating process shown in FIG. 13 ends.

When the control unit 40 determines that inspection of one or more inspection targets has not been performed in Step S304, the control unit 40 reads the management table from the memory 37 (Step S306).

After Step S306, the control unit 40 identifies a tube to be inspected next by referring to the management table. The control unit 40 superimposes green on the tube (Step S307). When the exterior image is displayed next, the user can determine that the green tube is an inspection target.

After Step S307, the control unit 40 outputs the exterior image to the display unit 36 and displays the exterior image on the display unit 36 (Step S308). When Step S308 is executed, the information-updating process shown in FIG. 13 ends. Thereafter, the inspection process shown in FIG. 10 is executed. The inspection process and the information-updating process are repeatedly executed until inspection of all the inspection targets ends.

Details of Step S307 will be described. The control unit 40 acquires information of the same number as that acquired in Step S200 from the management table and refers to information of the next number in the inspection turn. That number is the number of the tube to be inspected next. The control unit 40 refers to the tube information stored in the memory 37. The control unit 40 acquires the position associated with the number of the tube to be inspected next. The control unit 40 superimposes green on the tube at the position in the exterior image.

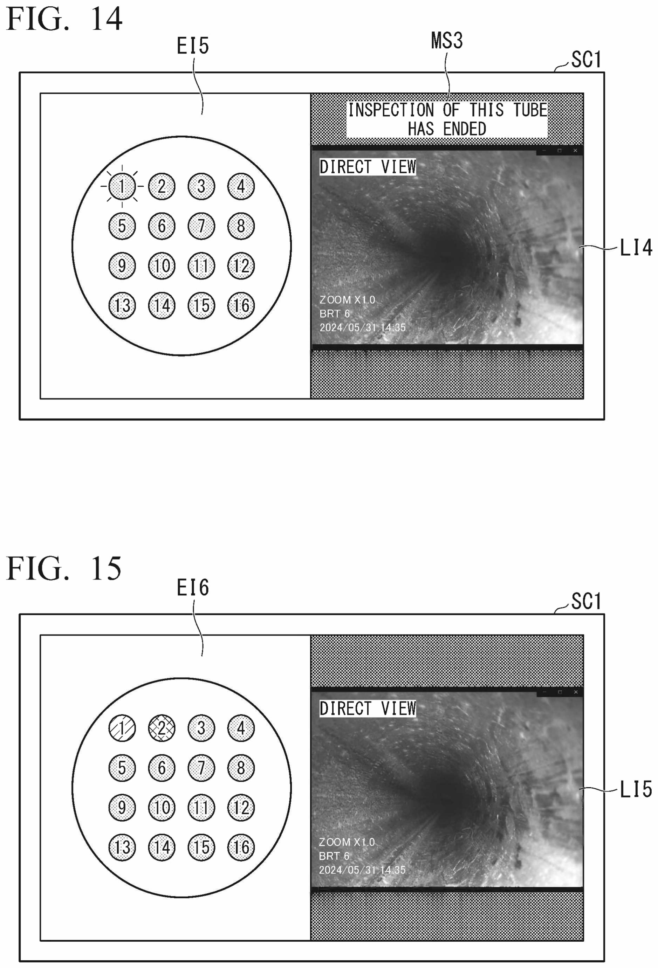

FIG. 14 shows an example of the screen SC1 of the display unit 36 in Step S305. The control unit 40 displays a live image LI4 and an exterior image EI5 on the screen SC1. The exterior image EI5 is the same as the exterior image EI3 shown in FIG. 11. The tube with number 1 in the exterior image EI5 flickers. The control unit 40 displays a message MS3 on the screen SC1. The message MS3 indicates that inspection of the tube with number 1 has ended.

FIG. 15 shows an example of the screen SC1 of the display unit 36 in Step S307. The control unit 40 displays a live image LI5 and an exterior image EI6 on the screen SC1. Yellow is superimposed on the tube with number 1 in the exterior image EI6. A user can determine that the tube with number 1 is not abnormal. Green is superimposed on the tube with number 2 in the exterior image EI6. The user can determine that the tube with number 2 is a next inspection target. Therefore, it is possible to reduce inspection mistakes in which a user inserts the insertion unit 2 into a tube other than an inspection target.

The endoscope system 1 (an inspection assistance system) according to an aspect of the present invention assists with endoscopic inspection of a heat exchanger including two or more tubes. The endoscope system 1 includes the insertion unit 2 and the control unit 40. The insertion unit 2 generates an internal image of at least one of the two or more tubes. The control unit 40 acquires an exterior image that is an image of an end portion of each of the two or more tubes or is an image of a figure indicating the end portion of each of the two or more tubes.

The control unit 40 assigns identification information to each of the two or more tubes. In the above-described example, the identification information is a number. The control unit 40 acquires inspection information including identification information of a tube that is included in the two or more tubes and is an inspection target. In the above-described example, the inspection information corresponds to the management table. The control unit 40 identifies an inspection target in the exterior image based on the inspection information and two or more pieces of the identification information corresponding to the two or more tubes in the exterior image. In the above-described example, the two or more pieces of the identification information are included in the tube information. For example, when the identification information of a tube in the exterior image is the same as that of the inspection information, the control unit 40 identifies the tube as an inspection target.

Before the insertion unit 2 is inserted into one of the two or more tubes or when the insertion unit 2 has been inserted into one of the two or more tubes, the control unit 40 outputs the exterior image and inspection target information indicating an inspection target to the display unit 36 (a display). In the above-described example, before the insertion unit 2 is inserted into a tube, the control unit 40 outputs the exterior image and the inspection target information to the display unit 36 in Step S308. In the above-described example, when the insertion unit 2 has been inserted into the tube, the control unit 40 outputs the exterior image and the inspection target information to the display unit 36 in Step S201. In the above-described example, the inspection target information corresponds to a color superimposed on the tube in the exterior image.

An inspection assistance method according to an aspect of the present invention assists with endoscopic inspection of a heat exchanger including two or more tubes. The inspection assistance method includes first to fifth steps. In a first step (Step S103), the control unit 40 acquires an exterior image. In a second step (Step S105), the control unit 40 assigns identification information to each of the two or more tubes. In a third step (Step S306), the control unit 40 acquires inspection information. In a fourth step (Step S307), the control unit 40 identifies an inspection target in the exterior image based on the inspection information and two or more pieces of the identification information corresponding to the two or more tubes in the exterior image. In a fifth step (Steps S201 and S308), the control unit 40 outputs the exterior image and inspection target information indicating the inspection target to the display unit 36.

A program according to an aspect of the present invention causes a computer to execute the first to fifth steps.

An aspect of the present invention may include the following modified example. The control unit 40 identifies a tube into which the insertion unit 2 has been inserted by processing an image generated by the insertion unit 2 (Step S200). The control unit 40 determines whether the tube into which the insertion unit 2 has been inserted is an inspection target (Step S202).

An aspect of the present invention may include the following modified example. When the tube into which the insertion unit 2 has been inserted is not an inspection target, the control unit 40 outputs a warning to the display unit 36 (Step S210).

An aspect of the present invention may include the following modified example. The control unit 40 receives an instruction to select an inspection mode corresponding to the endoscopic inspection of the heat exchanger (Step S100). When the instruction has been received, the control unit 40 acquires an exterior image (Step S103).

An aspect of the present invention may include the following modified example. The control unit 40 identifies a tube into which the insertion unit 2 has been inserted by processing an image generated by the insertion unit 2 (Step S200). The control unit 40 outputs insertion tube information indicating the tube into which the insertion unit 2 has been inserted to the display unit 36 (Step S201). In the above-described example, the insertion tube information is represented by causing the identified tube in the exterior image to flicker.

An aspect of the present invention may include the following modified example. The control unit 40 acquires an image generated by the insertion unit 2 as an exterior image from the insertion unit 2 (Step S103).

An aspect of the present invention may include the following modified example. The control unit 40 acquires an image generated by a camera other than the insertion unit 2 as an exterior image from the camera.

An aspect of the present invention may include the following modified example. The control unit 40 acquires an exterior image that is an image of a figure indicating an end portion of each of the two or more tubes from the memory 37 (a storage medium).

An aspect of the present invention may include the following modified example. The control unit 40 detects two or more tubes by processing the exterior image (Step S104). The control unit 40 assigns identification information to each of the two or more tubes detected from the exterior image (Step S105).

An aspect of the present invention may include the following modified example. The control unit 40 superimposes the inspection target information on the exterior image (Step S307).

An aspect of the present invention may include the following modified example. The endoscope system 1 includes an endoscope device including the insertion unit 2 and the control unit 40.

In the first embodiment, the control unit 40 outputs the exterior image and information of the inspection target to the display unit 36. Therefore, the endoscope system 1 can reduce inspection errors and enhance inspection efficiency.

The control unit 40 outputs insertion tube information indicating a tube into which the insertion unit 2 has been inserted to the display unit 36. The endoscope system 1 can notify a user of the tube into which the insertion unit 2 has been inserted.

When the insertion unit 2 has been inserted into a tube other than the inspection target, the control unit 40 outputs a warning to the display unit 36. The endoscope system 1 can notify the user that the insertion unit 2 has been inserted into a tube other than the inspection target and reduce inspection errors.

### (First modified example of first embodiment)

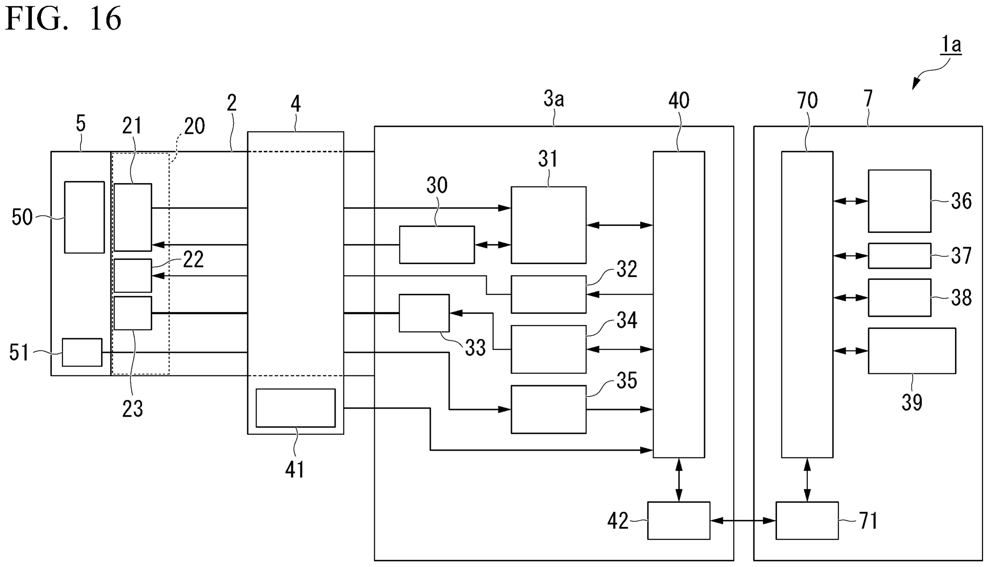

A first modified example of the first embodiment of the present invention will be described. FIG. 16 shows an example of the configuration of an endoscope system 1a according to the first modified example of the first embodiment. The same configuration as that shown in FIG. 1 will not be described. The same blocks as those shown in FIG. 1 are referred to by the same reference signs as those shown in FIG. 1.

The endoscope system 1a shown in FIG. 16 includes an insertion unit 2, a main body 3a, an insertion length detector 4, an optical adapter 5, and a base unit 7. The insertion unit 2 and the main body 3a constitute an endoscope device.

The insertion unit 2 shown in FIG. 16 is the same as the insertion unit 2 shown in FIG. 1. The insertion length detector 4 shown in FIG. 16 is the same as the insertion length detector 4 shown in FIG. 1. The optical adapter 5 shown in FIG. 16 is the same as the optical adapter 5 shown in FIG. 1.

The main body 3 shown in FIG. 1 is replaced with the main body 3a shown in FIG. 16. The main body 3a includes an imaging device driver 30, an image-processing unit 31, an LED drive unit 32, a motor 33, a bending control unit 34, an optical adapter identification unit 35, a control unit 40, and a communication unit 42. The communication unit 42 includes a communication circuit and executes wired communication or wireless communication for bending control or the like with the base unit 7.

The base unit 7 includes a control unit 70, a communication unit 71, a display unit 36, a memory 37, an operation unit 38, and an external device interface 39. The control unit 70 controls the each unit of the base unit 7. The communication unit 71 includes a communication circuit and executes wired communication or wireless communication for bending control or the like with the main body 3a.

At least one of the control unit 40 and the control unit 70 executes the processes shown in FIGS. 3, 10, and 13. When the main body 3a and the base unit 7 need to share information, the control unit 40 and the control unit 70 executes communication via the communication unit 42 and the communication unit 71.

An aspect of the present invention may include the following modified example. The endoscope system 1a includes an endoscope device including the insertion unit 2. The control unit 70 is separated from the endoscope device.

In the first modified example of the first embodiment, the endoscope system 1a can reduce inspection errors and enhance inspection efficiency similarly to the first embodiment.

### (Second modified example of first embodiment)

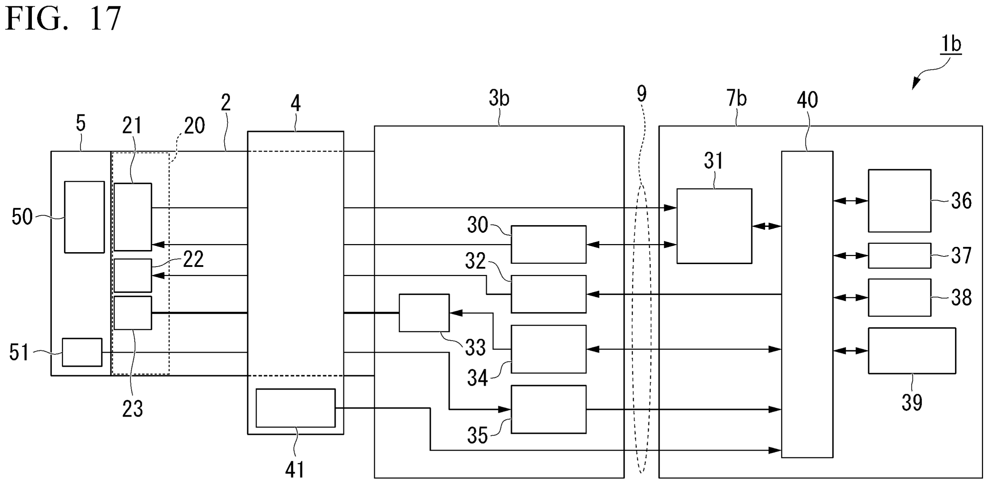

A second modified example of the first embodiment of the present invention will be described. FIG. 17 shows an example of the configuration of an endoscope system 1b according to the second modified example of the first embodiment. The same configuration as that shown in FIG. 1 will not be described. The same blocks as those shown in FIG. 1 are referred to by the same reference signs as those shown in FIG. 1.

The endoscope system 1b shown in FIG. 17 includes an insertion unit 2, a main body 3b, an insertion length detector 4, an optical adapter 5, and a base unit 7b. The insertion unit 2 and the main body 3b constitute an endoscope device. The main body 3b and the base unit 7b are connected via a cable 9.

The insertion unit 2 shown in FIG. 17 is the same as the insertion unit 2 shown in FIG. 1. The insertion length detector 4 shown in FIG. 17 is the same as the insertion length detector 4 shown in FIG. 1. The optical adapter 5 shown in FIG. 17 is the same as the optical adapter 5 shown in FIG. 1.

The main body 3 shown in FIG. 1 is replaced with the main body 3b shown in FIG. 17. The main body 3b includes an imaging device driver 30, an LED drive unit 32, a motor 33, a bending control unit 34, and an optical adapter identification unit 35. The base unit 7b includes an image-processing unit 31, a display unit 36, a memory 37, an operation unit 38, an external device interface 39, and a control unit 40.

An aspect of the present invention may include the following modified example. The endoscope system 1b includes an endoscope device including the insertion unit 2. The control unit 40 is separated from the endoscope device.

In the second modified example of the first embodiment, the endoscope system 1b can reduce inspection errors and enhance inspection efficiency similarly to the first embodiment.

### (Second embodiment)

A second embodiment of the present invention will be described. In the second embodiment, the endoscope system 1 shown in FIG. 1 is used. The endoscope system 1a shown in FIG. 16 or the endoscope system 1b shown in FIG. 17 may be used.

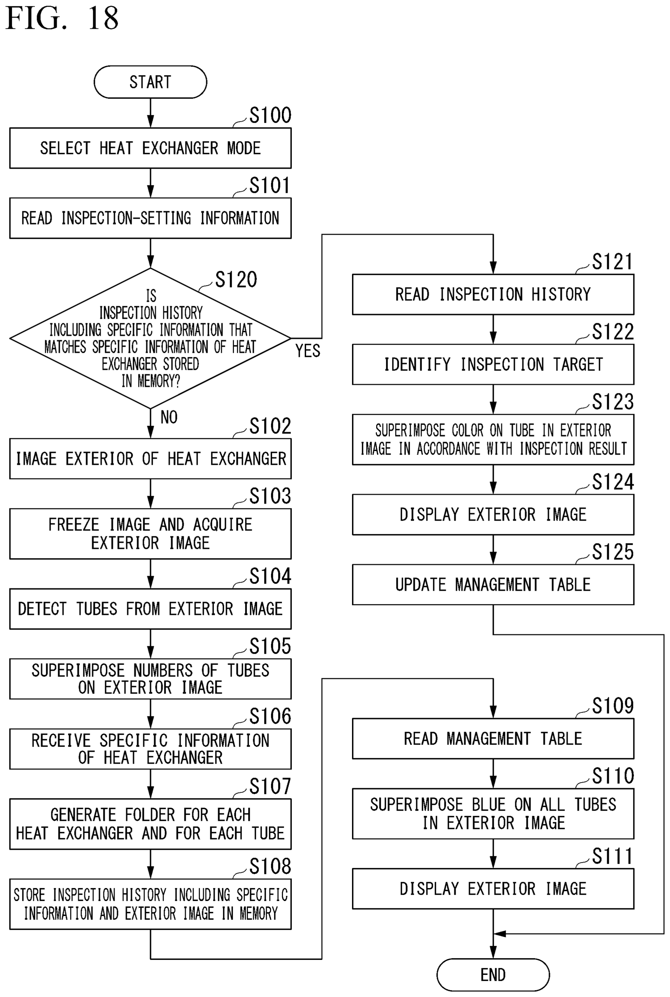

In the second embodiment, inspection of a heat exchanger is performed twice or more. For example, periodic inspection of a heat exchanger is performed every 6 months or every year. FIG. 18 shows an example of a preparation process executed by the endoscope system 1 before inspection of the heat exchanger is performed. The operations of the endoscope system 1 will be described by using FIG. 18. The same processes as those shown in FIG. 3 will not be described.

Before the first inspection starts, the inspection history including specific information of the heat exchanger is not stored in the memory 37. In the first inspection, similarly to the first embodiment, the inspection history including the specific information is stored in the memory 37. Before second inspection or inspection subsequent thereto starts, the inspection history including the specific information is stored in the memory 37.

The control unit 40 reads inspection-setting information including specific information of the heat exchanger from the memory 37 in Step S101. After Step S101, the control unit 40 determines whether an inspection history including specific information that matches that specific information is stored in the memory 37 (Step S120). Before the first inspection starts, the control unit 40 determines that the inspection history including the specific information is not stored in the memory 37. After the first inspection has been performed, the inspection history including the specific information is stored in the memory 37. When this specific information matches the specific information included in the inspection-setting information, the control unit 40 determines that the inspection history including the specific information is stored in the memory 37.

When the control unit 40 determines that the inspection history including the specific information is not stored in the memory 37 in Step S120, Step S102 is executed. When the control unit 40 determines that the inspection history including the specific information is stored in the memory 37 in Step S120, the control unit 40 reads the inspection history from the memory 37 (Step S121). The inspection history includes specific information, an exterior image, an inspection result, and device-setting information.

After Step S121, the control unit 40 identifies an inspection target based on the inspection-setting information (Step S122). The inspection-setting information corresponds to the inspection information.

Details of Step S122 will be described. The inspection-setting information includes information indicating a tube that is an inspection target. For example, the inspection-setting information includes a number of a tube that is an inspection target. The number corresponds to the number assigned to the tube in Step S105 when the first inspection has been performed. The control unit 40 identifies the tube to which the number corresponding to the number included in the inspection-setting information has been assigned. The tube is an inspection target. A tube to which the number corresponding to the number included in the inspection-setting information has not been assigned is not an inspection target.

The control unit 40 may identify an inspection target based on the inspection history regardless of the inspection-setting information. For example, the control unit 40 may identify a tube corresponding to a folder in which an inspection result indicating NG is stored as an inspection target.

After Step S122, the control unit 40 superimposes a color on the tube in the exterior image in accordance with the inspection result (Step S123).

Details of Step S123 will be described. The control unit 40 refers to tube information stored in the memory 37. The tube information includes positions of tubes in the exterior image and numbers of the tubes. The control unit 40 acquires a position associated with a number of a tube other than an inspection target. The control unit 40 superimposes white on the tube at the position in the exterior image.

The control unit 40 refers to the inspection result associated with the number of the tube that is an inspection target. The control unit 40 acquires a position associated with the number from the tube information. The control unit 40 superimposes a color on the tube at the position in the exterior image in accordance with the inspection result. When the inspection result indicates NG, the control unit 40 superimposes red on the tube in the exterior image. When the inspection result indicating NG is not stored in the folder and the value of the inspection target flag in the management table stored in the memory 37 is 1, the control unit 40 superimposes blue on the tube in the exterior image.

After Step S123, the control unit 40 outputs the exterior image to the display unit 36 and displays the exterior image on the display unit 36 (Step S124).

After Step S124, the control unit 40 updates the management table stored in the memory 37 (Step S125). When Step S125 is executed, the preparation process shown in FIG. 18 ends.

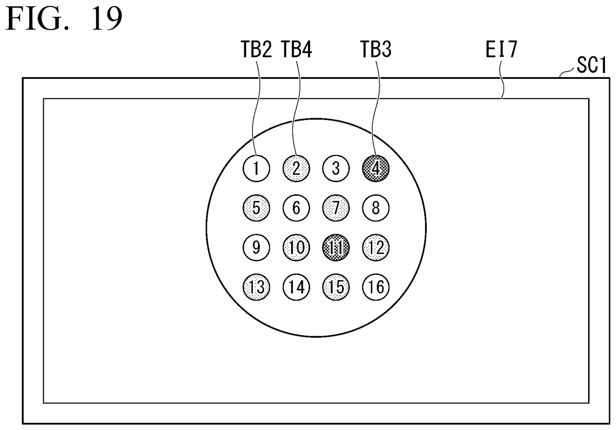

FIG. 19 shows an example of the screen SC1 of the display unit 36 in Step S124. The control unit 40 displays an exterior image EI7 on the screen SC1. A tube TB2 in the exterior image EI7 is not an inspection target, and white is superimposed on the tube TB2. An inspection result for a tube TB3 in the exterior image EI7 indicates NG, and red is superimposed on the tube TB3. An inspection result for a tube TB4 in the exterior image EI7 does not indicate NG, and blue is superimposed on the tube TB4.

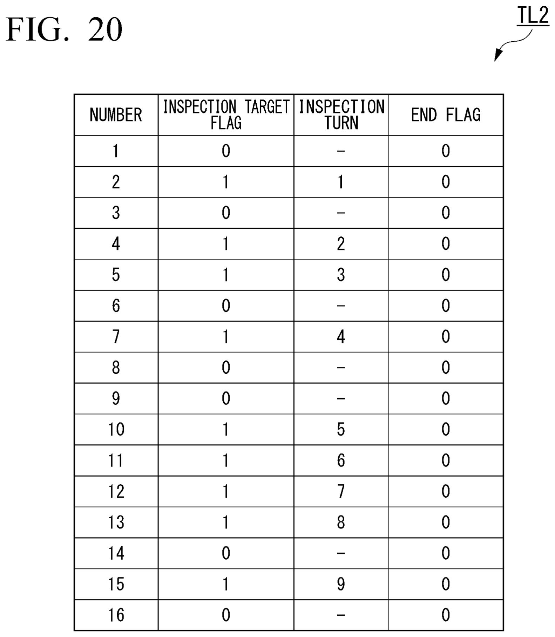

FIG. 20 shows an example of the management table. The control unit 40 updates the management table TL1 shown in FIG. 8 and stores a management table TL2 shown in FIG. 20 in the memory 37. The control unit 40 changes the value of the inspection target flag associated with a number of a tube that is not an inspection target to 0. The control unit 40 changes an inspection turn associated with a number of a tube that is an inspection target.

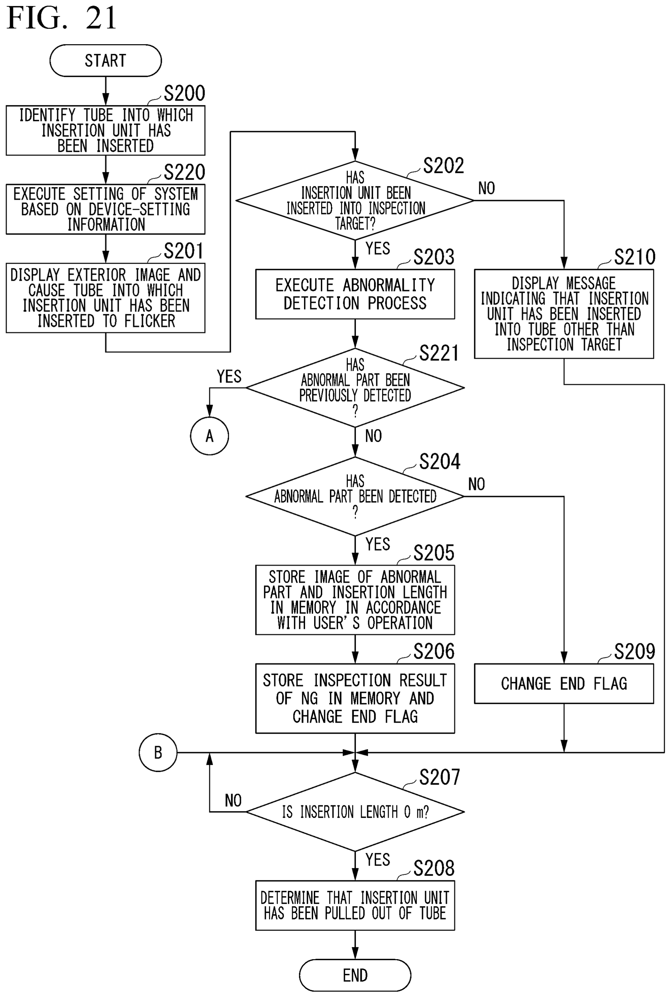

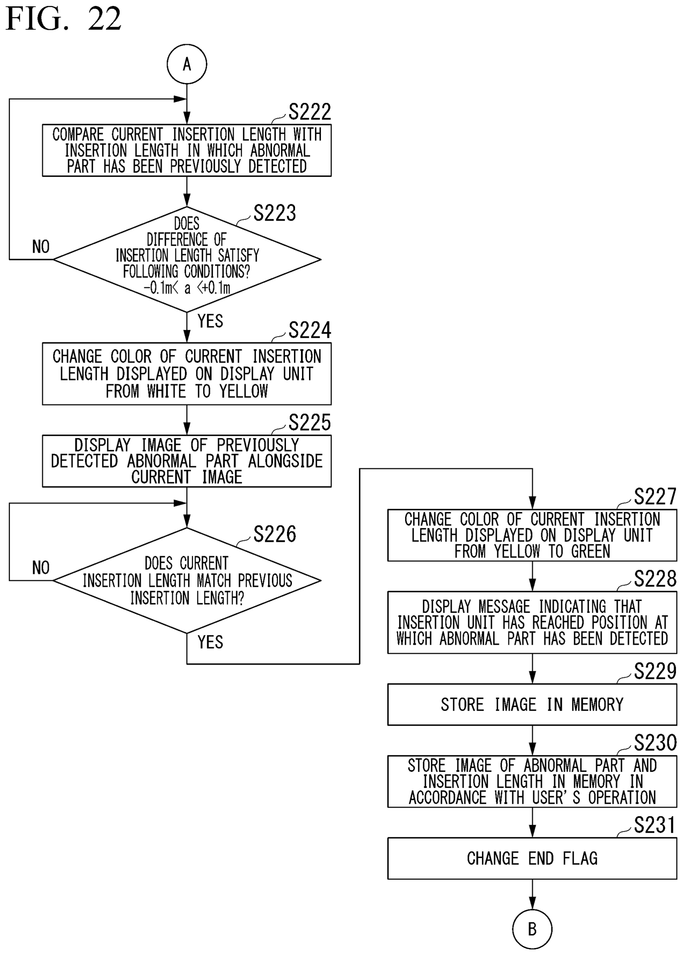

FIGS. 21 and 22 show an example of an inspection process executed by the endoscope system 1 after the preparation process has been performed. The operations of the endoscope system 1 will be described by using FIGS. 21 and 22. The same processes as those shown in FIG. 10 will not be described.

After Step S200, the control unit 40 reads the device-setting information included in the inspection history from the memory 37. The control unit 40 executes setting of the endoscope system 1 based on the device-setting information. For example, the control unit 40 sets an imaging magnification in the imaging device 21 to the same magnification as that included in the device-setting information. Alternatively, the control unit 40 sets brightness of the LED 22 based on illumination brightness included in the device-setting information (Step S220). In the first inspection, Step S220 is not executed. After Step S220, Step S201 is executed.

The control unit 40 outputs an exterior image to the display unit 36 in Step S201 and displays the exterior image on the display unit 36. The control unit 40 causes a tube into which the insertion unit 2 has been inserted in the exterior image to flicker in Step S201.

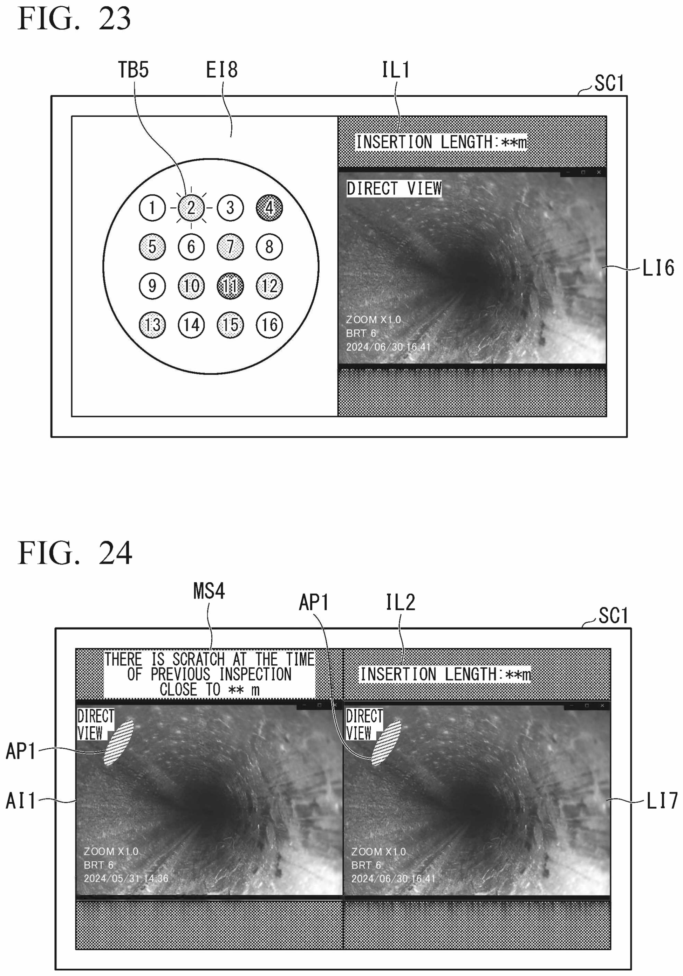

FIG. 23 shows an example of the screen SC1 of the display unit 36 in Step S201. The control unit 40 displays a live image LI6 and an exterior image EI8 on the screen SC1. The control unit 40 displays an insertion length IL1 on the screen SC1. The insertion length IL1 is displayed in white. The insertion unit 2 is inserted into the tube with number 2. The control unit 40 causes a tube TB5 with number 2 in the exterior image EI8 to flicker. By doing this, the control unit 40 displays insertion tube information indicating the tube into which the insertion unit 2 has been inserted.

After Step S203, the control unit 40 refers to an inspection result stored in the folder associated with the number of the tube identified in Step S200. The control unit 40 determines whether an abnormal part has been detected in previous inspection (Step S221). When the inspection result indicates NG, the control unit 40 determines that the abnormal part has been detected. When the inspection result indicating NG is not stored in the folder, the control unit 40 determines that the abnormal part has not been detected.

When the control unit 40 determines that the abnormal part has not been detected in Step S221, Step S204 is executed. When the control unit 40 determines that the abnormal part has been detected in Step S221, the control unit 40 compares a current insertion length with an insertion length in which the abnormal part has been detected in the previous inspection. The current insertion length is indicated by a signal output from the sensor 41 of the insertion length detector 4. The insertion length in which the abnormal part has been detected is indicated by the insertion length information included in the inspection history (Step S222).

After Step S222, the control unit 40 determines whether the difference between the two insertion lengths is greater than -0.1 m and less than 0.1 m (Step S223).

When the control unit 40 determines that the above-described conditions have not been satisfied in Step S223, Step S222 is executed again. The current insertion length changes while a user is moving the insertion unit 2. When the control unit 40 determines that the above-described conditions have been satisfied in Step S223, the control unit 40 changes the color of the insertion length displayed on the display unit 36 from white to yellow (Step S224). The user can determine that the distal end portion 20 becomes closer to the position of the abnormal part detected in the previous inspection.

After Step S224, the control unit 40 reads an abnormal image that is an image of the abnormal part detected in the previous inspection from the folder associated with the number of the tube identified in Step S200. The control unit 40 arranges the abnormal image and a live image generated by the imaging device 21 in a lateral direction or a longitudinal direction. The control unit 40 outputs the abnormal image and the live image to the display unit 36 and displays the abnormal image and the live image on the display unit 36 (Step S225).

FIG. 24 shows an example of the screen SC1 of the display unit 36 in Step S225. The control unit 40 displays an abnormal image AI1 and a live image LI7 on the screen SC1. The control unit 40 displays an insertion length IL2 on the screen SC1. The insertion length IL2 is displayed in yellow. An abnormal part AP1 appears in the abnormal image AI1 and the live image LI7. The control unit 40 displays a message MS4 including an insertion length stored in the memory 37 along with the abnormal image AI1 on the screen SC1. The control unit 40 may display an exterior image along with the abnormal image AI1 and the live image LI7 on the screen SC1.

After Step S225, the control unit 40 determines whether the current insertion length matches the insertion length in which the abnormal part has been detected in the previous inspection (Step S226).

When the control unit 40 determines that the current insertion length is different from the insertion length in which the abnormal part has been detected in the previous inspection in Step S226, Step S226 is executed again. The current insertion length changes while a user is moving the insertion unit 2. When the control unit 40 determines that the current insertion length matches the insertion length in which the abnormal part has been detected in the previous inspection in Step S226, the control unit 40 changes the color of the insertion length displayed on the display unit 36 from yellow to green (Step S227).

After Step S227, the control unit 40 outputs a message indicating that the insertion unit 2 has reached the position at which the abnormal part has been detected to the display unit 36 an displays the message on the display unit 36 (Step S228).

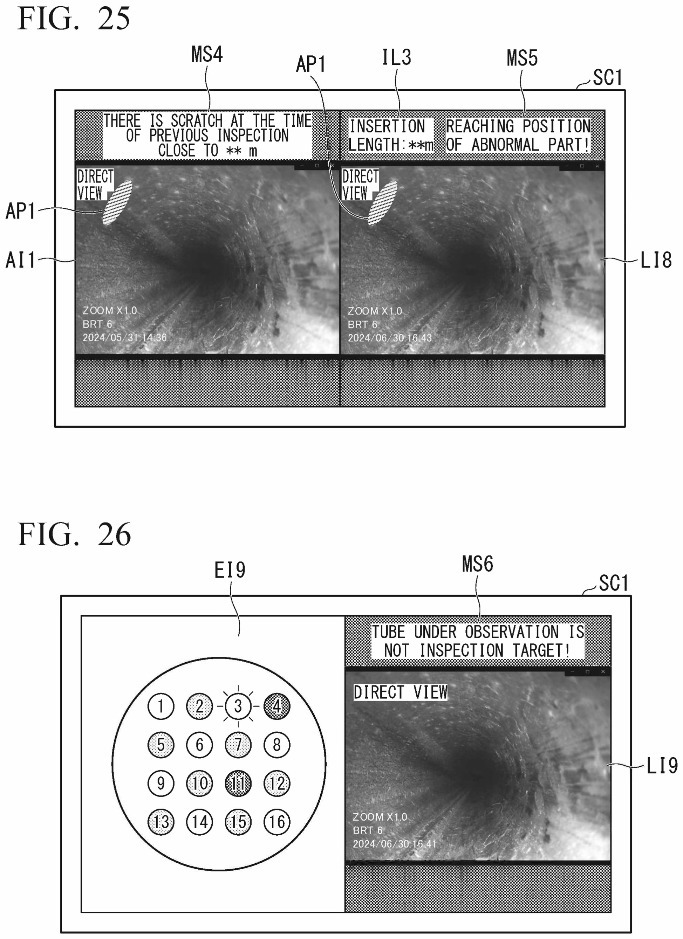

FIG. 25 shows an example of the screen SC1 of the display unit 36 in Step S228. The control unit 40 displays an abnormal image AI1 and a live image LI8 on the screen SC1. The abnormal image AI1 shown in FIG. 25 is the same as the abnormal image AI1 shown in FIG. 24. The control unit 40 displays an insertion length IL3 on the screen SC1. The insertion length IL3 is displayed in green. An abnormal part AP1 appears in the abnormal image AI1 and the live image LI8. The control unit 40 displays a message MS4 on the screen SC1. The message MS4 shown in FIG. 25 is the same as the message MS4 shown in FIG. 24. The control unit 40 displays a message MS5 indicating that the insertion unit 2 has reached the position at which the abnormal part has been detected on the screen SC1. The control unit 40 may display an exterior image along with the abnormal image AI1 and the live image LI8 on the screen SC1.

After Step S228, the control unit 40 acquires an image processed by the image-processing unit 31 and stores the image in the memory 37. The image is stored in the folder associated with the number of the tube identified in Step S200 and is included in the inspection history (Step S229).

When an abnormal part other than the abnormal part detected in the previous inspection is detected, a user inputs an instruction to acquire an abnormal image to the endoscope system 1 by operating the operation unit 38. The control unit 40 receives the instruction and stores the abnormal image and insertion length information indicating an insertion length in the memory 37. The insertion length is indicated by a signal output from the sensor 41 of the insertion length detector 4. The live image and the insertion length information are stored in the folder associated with the number of the tube identified in Step S200 and are included in the inspection history (Step S230).

After Step S230, the control unit 40 changes the value of the end flag associated with the number of the tube in the management table to 1 (Step S231). After Step S231, Step S207 is executed.

In Step S210, the control unit 40 displays a message indicating that the insertion unit 2 is inserted into a tube other than an inspection target to the display unit 36 and displays the message on the display unit 36. FIG. 26 shows an example of the screen SC1 of the display unit 36 in Step S210. The control unit 40 displays a live image LI9 and an exterior image EI9 on the screen SC1.

In the example shown in FIG. 26, the tube with number 3 is not an inspection target, and white is superimposed on the tube. In the example shown in FIG. 26, the insertion unit 2 is inserted into the tube with number 3, and the tube flickers in the exterior image. Since the insertion unit 2 is inserted into the tube other than an inspection target, the control unit 40 displays a message MS6 as a warning on the screen SC1. The message MS6 indicates that the tube into which the insertion unit 2 has been inserted is not an inspection target.

After the inspection process shown in FIGS. 21 and 22 has been performed, the endoscope system 1 executes the information-updating process shown in FIG. 13.

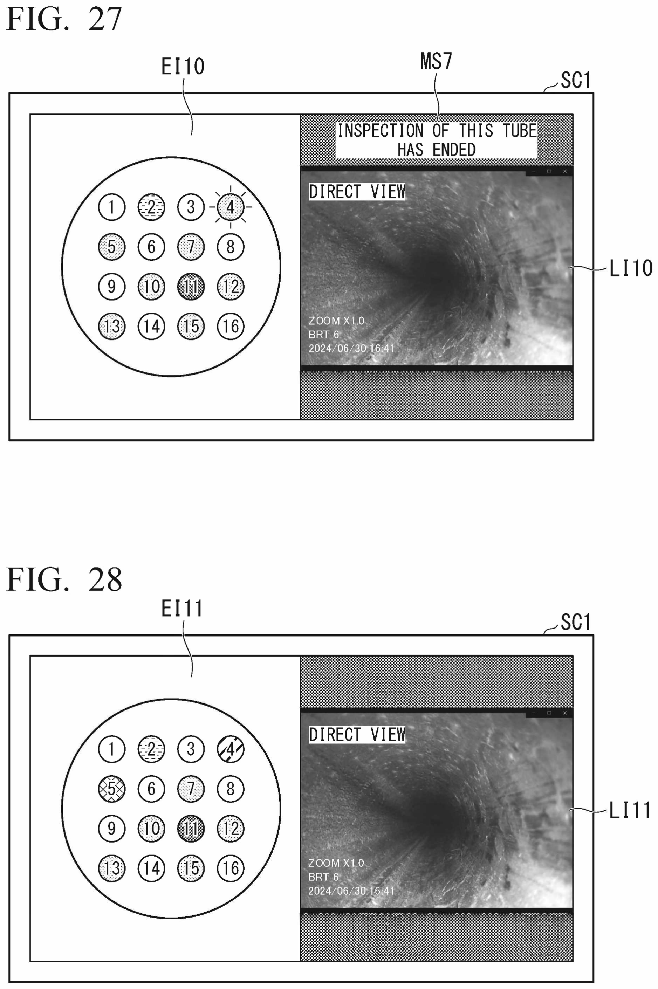

In Step S305, the control unit 40 outputs information indicating that the inspection has ended to the display unit 36 and displays the information on the display unit 36. FIG. 27 shows an example of the screen SC1 of the display unit 36 in Step S305. The control unit 40 displays a live image LI10 and an exterior image EI10 on the screen SC1. The tube with number 4 in the exterior image EI10 flickers. The control unit 40 displays a message MS7 on the screen SC1. The message MS7 indicates that inspection of the tube with number 4 has ended.

In Step S308, the control unit 40 outputs the exterior image to the display unit 36 and displays the exterior image on the display unit 36. FIG. 28 shows an example of the screen SC1 of the display unit 36 in Step S308. The control unit 40 displays a live image LI11 and an exterior image EI11 on the screen SC1. Orange is superimposed on the tube with number 2 in the exterior image EI11. A user can determine that an abnormal part has been detected in the tube with number 2. Yellow is superimposed on the tube with number 4 in the exterior image EI11. The user can determine that the tube with number 4 is not abnormal.

Red is superimposed on the tube with number 11 in the exterior image EI11. The user can determine that an abnormal part has been detected in the tube with number 11 in previous inspection. Green is superimposed on the tube with number 5 in the exterior image EI11. The user can determine that the tube with number 5 is an inspection target. Therefore, inspection mistakes in which the user inserts the insertion unit 2 into a tube other than an inspection target are reduced.

In an aspect of the present invention, the control unit 40 identifies an inspection target in an exterior image based on the inspection information and two or more pieces of the identification information corresponding to two or more tubes in the exterior image (Steps S307 and S122). In the above-described example, the two or more pieces of the identification information are included in the tube information. In the above-described example, the inspection information corresponds to the management table or the inspection-setting information. The control unit 40 outputs the exterior image and the inspection target information indicating an inspection target to the display unit 36 (Steps S201, S308, and S124).

An aspect of the present invention may include the following modified example. The control unit 40 acquires an image generated by the insertion unit 2 as an exterior image from the memory 37 (storage medium) (Step S121).

An aspect of the present invention may include the following modified example. The control unit 40 acquires specific information of the heat exchanger (Step S101) and determines whether inspection information including the specific information is stored in the memory 37 (Step S120). In the above-described example, the inspection information corresponds to the inspection history. After it is determined that the inspection information is not stored in the memory 37, the control unit 40 stores the inspection information including the specific information in the memory 37 (Step S108).

An aspect of the present invention may include the following modified example. The control unit 40 stores the exterior image and the inspection information including inspection result information in the memory 37 (Steps S108 and S206). The inspection result information indicates a result of endoscopic inspection for a tube associated with one of the two or more pieces of the identification information.

An aspect of the present invention may include the following modified example. When it is determined that the inspection information including the specific information is not stored in the memory 37, the control unit 40 generates two or more folders in the memory 37 (Step S107) and associates the two or more folders with the two or more pieces of the identification information (Step S107). After endoscopic inspection has been performed, the control unit 40 stores the inspection result information in the folder associated with the identification information of a tube on which the endoscopic inspection has been performed (Step S206).

An aspect of the present invention may include the following modified example. The control unit 40 sets a display state of the inspection target information according to the inspection result information (Steps S123, S301, and S302).

An aspect of the present invention may include the following modified example. When it is determined that the inspection information including the specific information is not stored in the memory 37, the control unit 40 outputs information for encouraging a user to image an end portion of each of the two or more tubes to the display unit 36 in order to acquire an exterior image (Step S102).

An aspect of the present invention may include the following modified example. When it is determined that the inspection information including the specific information is not stored in the memory 37, the control unit 40 identifies all of the two or more tubes as inspection targets (Step S110).

An aspect of the present invention may include the following modified example. When it is determined that the inspection information including the specific information is stored in the memory 37, the control unit 40 acquires inspection information from the memory 37 (Step S121).

In the second embodiment, inspection of a heat exchanger is performed twice or more. When each inspection is performed, the control unit 40 outputs an exterior image and inspection target information to the display unit 36. Therefore, the endoscope system 1 can reduce inspection errors and enhance inspection efficiency.

The control unit 40 determines whether inspection information including specific information of the heat exchanger is stored in the memory 37. Before first inspection starts, the inspection information including the specific information is not stored in the memory 37. Before second inspection or subsequent inspection starts, an inspection history including the specific information is stored in the memory 37. The endoscope system 1 can determine the number of times inspection has been performed.

When the inspection information including the specific information is not stored in the memory 37, the control unit 40 identifies all of the two or more tubes as inspection targets. When the inspection information including the specific information is stored in the memory 37, the control unit 40 identifies an inspection target based on the inspection information acquired from the memory 37. The endoscope system 1 can identify an inspection target in accordance with the number of times inspection has been performed.

While preferred embodiments of the invention have been described and shown above, it should be understood that these are examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### REFERENCE SIGNS LIST

1, 1a, 1b Endoscope system
2 Insertion unit
3, 3a, 3b Main body
4 Insertion length detector
5 Optical adapter
7, 7b Base unit
20 Distal end portion
21 Imaging device
22 LED
23 Wire-fixing unit
30 Imaging device driver
31 Image-processing unit
32 LED drive unit
33 Motor
34 Bending control unit
35 Optical adapter identification unit
36 Display unit
37 Memory
38 Operation unit
39 External device interface
40, 70 Control unit
41 Sensor
42, 71 Communication unit
50 Optical lens
51 Identifier storage unit

## Claims

1. An inspection assistance system for assisting with endoscopic inspection of a heat exchanger including two or more tubes, the inspection assistance system comprising:
an insertion unit configured to generate an internal image of at least one of the two or more tubes; and
a control unit configured to:
acquire an exterior image that is an image of an end portion of each of the two or more tubes or is an image of a figure indicating the end portion of each of the two or more tubes;
assign identification information to each of the two or more tubes in the exterior image;
acquire inspection information including identification information of a tube that is included in the two or more tubes and is an inspection target;
identify the inspection target in the exterior image based on the inspection information and two or more pieces of the identification information corresponding to the two or more tubes in the exterior image; and
output the exterior image and inspection target information indicating the inspection target to a display before the insertion unit is inserted into one of the two or more tubes or when the insertion unit has been inserted into one of the two or more tubes.

2. The inspection assistance system according to claim 1, wherein the control unit is configured to:
identify a tube into which the insertion unit is inserted by processing an image generated by the insertion unit; and
determine whether the tube into which the insertion unit is inserted is the inspection target.

3. The inspection assistance system according to claim 2, wherein the control unit is configured to output a warning to the display when it is determined that the tube into which the insertion unit is inserted is not the inspection target.

4. The inspection assistance system according to claim 1, wherein the control unit is configured to:
receive an instruction to select an inspection mode corresponding to the endoscopic inspection of the heat exchanger; and
acquire the exterior image after the instruction has been received.

5. The inspection assistance system according to claim 1, wherein the control unit is configured to:
identify a tube into which the insertion unit is inserted by processing an image generated by the insertion unit; and
output insertion tube information indicating the tube into which the insertion unit is inserted to the display.

6. The inspection assistance system according to claim 1, wherein the control unit is configured to acquire an image generated by the insertion unit as the exterior image from the insertion unit or a storage medium.

7. The inspection assistance system according to claim 1, wherein the control unit is configured to acquire an image generated by a camera other than the insertion unit as the exterior image from the camera.

8. The inspection assistance system according to claim 1, wherein the control unit is configured to acquire the exterior image that is the image of the figure from a storage medium.

9. The inspection assistance system according to claim 1, wherein the control unit is configured to:
acquire specific information of the heat exchanger;
determine whether the inspection information including the specific information is stored in a storage medium; and
store the inspection information including the specific information in the storage medium after it has been determined that the inspection information is not stored in the storage medium.

10. The inspection assistance system according to claim 9, wherein the control unit is configured to store the inspection information including the exterior image and inspection result information indicating a result of the endoscopic inspection of a tube associated with one of the two or more pieces of the identification information in the storage medium.

11. The inspection assistance system according to claim 10, wherein the control unit is configured to:
generate two or more folders in the storage medium when it is determined that the inspection information including the specific information is not stored in the storage medium;
associate each of the two or more folders with one of the two or more pieces of the identification information; and
store the inspection result information in a folder associated with the identification information of a tube on which the endoscopic inspection has been performed after the endoscopic inspection has been performed.

12. The inspection assistance system according to claim 10, wherein the control unit is configured to set a display state of the inspection target information based on the inspection result information.

13. The inspection assistance system according to claim 9, wherein the control unit is configured to output information for prompting imaging of the end portion of each of the two or more tubes in order to acquire the exterior image to the display when it is determined that the inspection information including the specific information is not stored in the storage medium.

14. The inspection assistance system according to claim 13, wherein the control unit is configured to identify all of the two or more tubes as the inspection target when it is determined that the inspection information including the specific information is not stored in the storage medium.

15. The inspection assistance system according to claim 9, wherein the control unit is configured to acquire the inspection information from the storage medium when it is determined that the inspection information including the specific information is stored in the storage medium.

16. The inspection assistance system according to claim 1, wherein the control unit is configured to:
detect the two or more tubes by processing the exterior image; and
assign the identification information to each of the two or more tubes detected from the exterior image.

17. The inspection assistance system according to claim 1, wherein the control unit is configured to superimpose the inspection target information on the exterior image.

18. The inspection assistance system according to claim 1, further comprising an endoscope device including the insertion unit and the control unit.

19. The inspection assistance system according to claim 1, further comprising an endoscope device including the insertion unit,
wherein the control unit is separated from the endoscope device.

20. An inspection assistance method of assisting with endoscopic inspection of a heat exchanger including two or more tubes, the inspection assistance method being executed by a control unit, the inspection assistance method comprising:
acquiring an exterior image that is an image of an end portion of each of the two or more tubes or is an image of a figure indicating the end portion of each of the two or more tubes;
assigning identification information to each of the two or more tubes in the exterior image;
acquiring inspection information including identification information of a tube that is included in the two or more tubes and is an inspection target;
identifying the inspection target in the exterior image based on the inspection information and two or more pieces of the identification information corresponding to the two or more tubes in the exterior image; and
outputting the exterior image and inspection target information indicating the inspection target to a display before an insertion unit configured to generate an internal image of at least one of the two or more tubes is inserted into one of the two or more tubes or when the insertion unit has been inserted into one of the two or more tubes.

21. A program causing a computer to execute:
acquiring an exterior image that is an image of an end portion of each of two or more tubes included in a heat exchanger or an image of a figure indicating the end portion of each of the two or more tubes;
assigning identification information to each of the two or more tubes in the exterior image;
acquiring inspection information including identification information of a tube that is included in the two or more tubes and is an inspection target;
identifying the inspection target in the exterior image based on the inspection information and two or more pieces of the identification information corresponding to the two or more tubes in the exterior image; and
outputting the exterior image and inspection target information indicating the inspection target to a display before an insertion unit configured to generate an internal image of at least one of the two or more tubes is inserted into one of the two or more tubes or when the insertion unit has been inserted into one of the two or more tubes.
